# EUROPÄISCHE PATENTSCHRIFT

(11) **EP 0 574 804 B1**
(45) Veröffentlichungstag und Bekanntmachung des Hinweises auf die Patenterteilung: **27.12.1996**
(21) Anmeldenummer: 93109178.9
(22) Anmeldetag: 08.06.1993
(51) Int. Cl.: C08L 23/02, C08K 5/3415

(54) **Maleinsäurebisimidvernetzte, weiche Polyolefinmischungen**
Maleic acid bisimide cured, soft polyolefin blends
Mélanges polyoléfiniques souples, réticulées par le bisimide d'acide maléique

(30) Priorität: 17.06.1992 DE 4219863
(43) Veröffentlichungstag der Anmeldung: 22.12.1993
(73) Patentinhaber: BASF Aktiengesellschaft, 67063 Ludwigshafen (DE)
(72) Erfinder: Brosius, Sibylle, Dr., B-6700 Ludwigshafen (DE); Marczinke, Bernd Lothar, Dr., W-6720 Speyer (DE); Schwager, Harald, Dr., W-6720 Speyer (DE)

(56) Entgegenhaltungen:
- EP-A- 0 338 860
- DE-A- 1 920 692
- DATABASE WPI Derwent Publications Ltd., London, GB; AN 88-142734 & JP-A-63 083 147 (NIPPON PETROCHEMICAL) 13. April 1988
- DATABASE WPI Derwent Publications Ltd., London, GB; AN 88-142734 & JP-A-63 083 147

## Beschreibung

Die vorliegende Erfindung betrifft teilvernetzte Polyolefinmischungen, erhältlich durch Teilvernetzung der nachfolgenden Komponenten a), b), c) und falls vorhanden e) mit der Komponente d), wobei als Komponenten a), b), c) und d) eingesetzt werden,
a) ein Polymerisat aus 25 bis 97 Gew.-% eines Propylenpolymerisats (I), das 0 bis 15 Gew.-% an einpolymerisierten C₂-C₁₀-Alk-1-enen enthält und aus 3 bis 75 Gew.-% eines weiteren Propylenpolymerisats (II), das 15 bis 80 Gew.-% einpolymerisierte C₂-C₁₀-Alk-1-ene aufweist,
b) ein statistisch verteiltes Ethylencopolymerisat mit 5 bis 20 Gew.-% an einpolymerisierten C₃-C₁₀-Alk-1-enen und einer Dichte bei Raumtemperatur von 0,89 bis 0,925 g/cm³
c) ein kautschukartiges Material mit einer Shore A-Härte von 30 bis 90 nach DIN 53 505und
d) eine Bismaleinimidoverbindung der folgenden Formel (I) 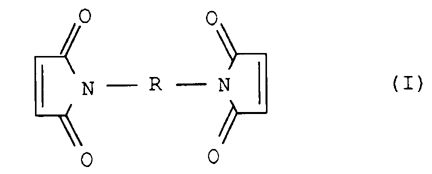 in der R die folgende Bedeutung hat:
   C₁-C₂₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann,
   sowie einen Rest der folgenden Formel (II)

   R¹-Z-R² (II)

   wobei R¹ und R² jeweils unabhängig voneinander für
   C₁-C₁₀-Alkyl-, C₅-C₇-Cycloalkyl- oder C₆-C₁₀-Arylreste stehen, die ihrerseits jeweils mit einer oder mehrerer C₁-C₁₀-Alkyl- und/oder C₁-C₆-Alkoxy- und/oder C₁-C₄-Dialkylaminogruppen substituiert sein können,
   eine C₁-C₁₀-Alkylgruppe, eine C₁-C₄-Dialkylaminogruppe, ein Sauerstoffatom oder eine Sulfongruppe bedeutet und und Z
e) gegebenenfalls ein statistisch verteiltes Propylencopolymerisat mit 1 bis 10 Gew.-% an einpolymerisierten C₂-C₁₀-Alk-1-enen mitverwendet wird.

Außerdem betrifft die vorliegende Erfindung ein Verfahren zur Herstellung der erfindungsgemäßen teilvernetzten Polyolefinmischungen und Folien und Formkörper aus diesen Polyolefinmischungen.

Vernetzte Polymerisate weisen gegenüber nicht vernetzten Polymerisaten den Vorteil einer höheren mechanischen Stabilität auf. Vollständig vernetzte Materialien lassen sich aber aufgrund ihres geringen Schmelzflusses thermisch nicht mehr mit den in der Kunststofftechnik üblichen Methoden verformen (H.G. Elias "Makromoleküle", Verlag Hüthig & Wepf, 4. Auflage, Seite 1000-1003). Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können.

Es ist bekannt, Polypropylene oder Copolymerisate des Propylens mit ungesättigten Silanen in Gegenwart eines Silanolkondensationskatalysators und eines Peroxids zu vernetzen (DE-A 33 27 149 und DE-A 35 20 106). Die dabei erhaltenen Polymerisate zeichnen sich u.a. durch eine hohe Kälteschlagzähigkeit und Formbeständigkeit aus. Die Vernetzung mit Hilfe ungesättigter Silane ist jedoch verfahrenstechnisch relativ aufwendig, da in diesem Fall drei verschiedene Komponenten, das Silan, der Katalysator und das Peroxid eingesetzt werden müssen.

In der DE-A 3 901 606 wird ein Verfahren zur Herstellung von vernetzbaren Copolymerisaten des Propylens beschrieben, wobei in einem ersten Schritt die dabei verwendeten Copolymerisate mit Maleinsäurederivaten gepfropft werden. Im Anschluß daran werden die gepfropften Copolymerisate mit multifunktionellen Aminen oder Alkoholen zu vernetzbaren Polymerisaten umgesetzt. Die auf diese Weise erhaltenen Produkte sind gut lagerfähig und können leicht weiterverarbeitet werden. Die Herstellung dieser vernetzbaren Polymerisate ist jedoch relativ aufwendig, da diese in mehreren aufeinanderfolgenden Schritten erfolgt. Darüber hinaus haben die daraus erhaltenen Produkte entweder saure oder basische Eigenschaften, was für manche technische Anwendungsgebiete nicht erwünscht ist.

Die Vernetzung von kautschukartigen Materialien auf der Basis von Ethylen und Propylen mit Hilfe von Bismaleinimidoverbindungen ist ebenfalls möglich, vorausgesetzt, daß diese durch energiereiche Strahlen (S.M. Miller et al., J. Polym. Sci. 58, 737 (1982)), durch schwefelhaltige Vernetzungssysteme (W. Hofmann, Kautschuk + Gummi, Kunststoffe, 308, Nr. 4/87) oder durch Peroxidverbindungen (Y. W. Chow, G.T. Knight, Gummi-Asbest-Kunststoffe 31, 716 (1978) initiiert wird. Bei diesen Verfahren beobachtet man aber häufig einen Molmassenabbau des Propylenpolymerisats, der dessen mechanische Eigenschaften verschlechtert. Darüber hinaus sind diese Verfahren technisch relativ aufwendig.

JP-A-63-083 147 beschreibt vernetzte Polyolefinmischungen erhalten durch Vernetzung einer Mischung vom Propylenpolymerisat, Ethylencopolymerisat mit einer Dichte von 0.86 bis 0.91, Isoprenkautschuk und einem Maleimide wie N,N-m-Phenylendimaleimide als Vernetzungsmittel. Das erhaltene thermoplastische Elastomer ist leicht verformbar, zeigt gute Schlagzähigkeit, Wärme- und Ölbeständigkeit sowie Flexibilität und wird beispielsweise für Stoßdämpfer verwendet.

Der vorliegenden Erfindung lag daher die Aufgabe zugrunde, den geschilderten Nachteilen abzuhelfen und teilvernetzte Polyolefinmischungen mit guten anwendungstechnischen Eigenschaften zu entwickeln, die nach einem wenig aufwendigen Verfahren hergestellt werden können.

Demgemäß wurden die eingangs definierten, teilvernetzten Polyolefinmischungen gefunden.

Die erfindungsgemäßen teilvernetzten Polyolefinmischungen enthalten ein Polymerisat a) aus 25 bis 97 Gew.-% eines Propylenpolymerisats (I), das 0 bis 15 Gew.-% an einpolymerisierten C₂-C₁₀-Alk-1-enen aufweist und aus 3 bis 75 Gew.-% eines weiteren Propylenpolymerisats (II), mit 15 bis 80 Gew.-% einpolymerisierte C₂-C₁₀-Alk-1-ene. Bevorzugt sind dabei solche Polymerisate a), die aus 35 bis 95 Gew.-% eines Propylenpolymerisats (I) mit 0 bis 12 Gew.-% einpolymerisierter C₂-C₁₀-Alk-1-ene und aus 5 bis 65 Gew.-% eines Propylenpolymerisats (II) mit 20 bis 75 Gew.-% einpolymerisierter C₂-C₁₀-Alk-1-ene bestehen. Besonders bevorzugte Polymerisate a) enthalten 40 bis 93 Gew.-% eines Propylenpolymerisats (I) mit 0 bis 9 Gew.-% einpolymerisierter C₂-C₁₀-Alk-1-ene und 7 bis 60 Gew.-% eines Propylenpolymerisats (II) mit 25 bis 70 Gew.-% einpolymerisierter C₂-C₁₀-Alk-1-ene. Vorzugsweise kann man auch ein solches Polymerisat a) verwenden, welches als Propylenpolymerisat (I) ein Propylenhomopolymerisat aufweist.

Unter einpolymerisierten C₂-C₁₀-Alk-1-enen sind in diesem Zusammenhang insbesondere Ethylen, But-1-en, Pent-1-en, Hex-1-en, Hept-1-en, Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird. Die Polymerisation kann dabei sowohl in der Gasphase, als auch in einer Lösung oder in einer Suspension durchgeführt werden.

Das Verfahren kann mit den in der Polymerisationstechnik üblichen Ziegler-Natta-Katalysatoren durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂ · aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m2/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (III) 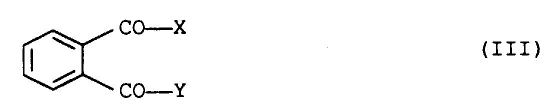 verwendet, wobei X und Y jeweils für Chlor oder einen C₁-bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3-oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C5- bis C₇-cycloalkanole, die ihrerseits C₁-bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂ · aAl₂O₃ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel III hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel (IV)

R³ ₙSi(OR⁴)₄₋ₙ (IV)

wobei R³ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R⁴ gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R³ eine C₁- bis C₈-Alkylgruppe oder eine 5- bis 7-gliedrige Cycloalkylgruppe, R⁴ eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die in den erfindungsgemäßen, teilvernetzten Polyolefinmischungen enthaltenen Polymerisate a) hergestellt werden. Nach einem bevorzugten zweistufigen Verfahren wird dabei zunächst in einer ersten Polymerisationsstufe das Propylenpolymerisat (I), und daran anschließend in einer zweiten Polymerisationsstufe das Propylenpolymerisat (II) hergestellt.

Die Polymerisation des Propylens, sowie gegebenenfalls der entsprechenden C₂-C₁₀-Alk-1-ene wird in der ersten Polymerisationsstufe üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind bei der Herstellung des Propylenpolymerisats (I) Drücke von 25 bis 35 bar, Temperaturen von 65 bis 85°C und mittlere Verweilzeiten von 1,5 bis 4 Stunden. Vorzugsweise wählt man dabei die Reaktionsbedingungen so, daß in dieser ersten Polymerisationsstufe pro mmol der Aluminiumkomponente 0,05 bis 2 kg des Propylenpolymerisats (I) gebildet werden. Als C₂-C₁₀-Alk-1-en wird dabei insbesondere Ethylen und But-1-en, oder ein Gemisch aus diesen Comonomeren verwendet, sofern es sich bei dem Propylenpolymerisat (I) um ein Copolymerisat handelt. In diesem Fall wird bei der Herstellung des Propylenpolymerisats (I) das Propylen mit den Comonomeren in der Weise copolymerisiert, daß das Verhältnis zwischen dem Partialdruck des Propylens und dem der Comonomeren auf 10:1 bis 1000:1, insbesondere auf 15:1 bis 500:1, eingestellt wird.

Das hierbei gebildete Propylenpolymerisat (I) wird nach Beendigung der Reaktion zusammen mit dem Katalysator aus der ersten Polymerisationsstufe ausgetragen und in die zweite Polymerisationsstufe eingeführt, wo das Propylenpolymerisat (II) hergestellt wird.

Dies erfolgt in der zweiten Polymerisationsstufe dadurch, daß in Anwesenheit des Propylenpolymerisats (I) Propylen zusammen mit einem oder mehreren C₂-C₁₀-Alk-1-enen bei Drücken von 5 bis 25 bar, Temperaturen von 30 bis 80°C und mittleren Verweilzeiten des Reaktionsgemisches von 1 bis 5 Stunden polymerisiert wird. Bevorzugt sind dabei Drücke von 10 bis 20 bar, Temperaturen von 40 bis 70°C und mittlere Verweilzeiten von 1,5 bis 4 Stunden. Üblicherweise liegen dabei die Drücke in der zweiten Polymerisationsstufe um wenigstens 7, vorzugsweise um wenigstens 10 bar unter denen in der ersten Polymerisationsstufe. Als C₂-C₁₀-Alk-1-ene werden dabei insbesondere Ethylen und But-1-en, oder ein Gemisch aus diesen Comonomeren eingesetzt. Zur Herstellung des Propylenpolymerisats (II) wird das Propylen mit den Comonomeren in der Weise copolymerisiert, daß das Verhältnis zwischen dem Partialdruck des Propylens und dem der Comonomeren auf 0,5:1 bis 20:1, insbesondere auf 0,5:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt.

Die Schmelzflußindizes der auf diese Weise erhältlichen Polymerisate a) liegen im Bereich von 0,1 bis 100, insbesondere im Bereich von 0,5 bis 50 g/10 min, bei 230°C und 2,16 kg, nach DIN 53 735. Der Schmelzflußindex entspricht dabei derjenigen Menge an Polymerisat, die bei 230°C und unter einem Gewicht von 2,16 kg aus der nach DIN 53 735 genormten Prüfvorrichtung ausgetragen wird.

Weiterhin enthält die erfindungsgemäße teilvernetzte Polyolefinmischung neben dem Polymerisat a) ein statistisch verteiltes Ethylencopolymerisat b), mit 5 bis 20 Gew.-% an einpolymerisierten C₃-C₁₀-Alk-1-enen, dessen Dichte bei Raumtemperatur 0,89 bis 0,925 g/cm³ beträgt. Bevorzugt wird dabei ein solches statistisch verteiltes Ethylencopolymerisat b) eingesetzt, das 8 bis 20 Gew.-% einpolymerisierter C₃-C₁₀-Alk-ene enthält. Unter einpolymerisierten C₃-C₁₀-Alk-1-enen sind in diesem Zusammenhang insbesondere Propylen, But-1-en, Pent-1-en, Hex-1-en, Hept-1-en oder Oct-1-en oder Gemische aus diesen Comonomeren zu verstehen, wobei bevorzugt Propylen, But-1-en, Hex-1-en oder Oct-1-en verwendet werden.

Die Herstellung derartiger statistisch verteilter Ethylencopolymerisate erfolgt üblicherweise durch Niederdruckpolymerisation der Comonomere mit metallhaltigen Katalysatoren, beispielsweise mit Hilfe von titan- und aluminiumhaltigen Ziegler-Katalysatoren. Die Polymerisationsreaktion kann dabei mit den in der Technik üblichen Reaktoren, beispielsweise Rührkesseln, sowohl in der Gasphase, in Lösung oder auch in einer Aufschlämmung durchgeführt werden. In einem bevorzugt angewandten Verfahren stellt man die erfindungsgemäß eingesetzten Ethylencopolymersate b) durch Gasphasenpolymerisation mit Hilfe von Ziegler-Katalysatoren bei Drücken von 10 bis 100 bar, Temperaturen von 30 bis 100°C und mittleren Verweilzeiten von 0,5 bis 5 Stunden her. Bei diesem Verfahren wird das Partialdruckverhältnis zwischen Ethylen und den C₃-C₁₀-Alk-1-enen auf 2:1 bis 100:1 eingestellt.

Darüber hinaus liegt in der erfindungsgemäßen teilvernetzten Polyolefinmischung noch ein kautschukartiges Material c) mit einer Shore A-Härte von 30 bis 90 (nach DIN 53 505) vor. Bei der Härtebestimmung nach Shore wird die Eindringtiefe eines Kegelstumpfes in das Probematerial bestimmt. Beispiele für kautschukartige Materialien c) sind u.a. Styrol-Butadien-Blockcopolymerisate, Styrol-Ethylen-Buten-Terpolymerisate, Acrylatkautschuke, Ethylen-Propylen-Kautschuke, Ethylen-Propylen-Dien-Kautschuke, Isoprenkautschuke, Styrol-Isoprenkautschuke, Polyisobutylenkautschuke, Ethylen-Vinylacetat-Copolymerisate, Polyurethankautschuke, Nitril-Kautschuke sowie Naturkautschuke. Bevorzugt werden dabei Styrol-Ethylen-Buten-Terpolymerisate, Ethylen-Propylen-Kautschuke, Ethylen-Propylen-Dien-Kautschuke, Polyisobutylenkautschuke und Acrylatkautschuke verwendet.

Bei der Herstellung der erfindungsgemäßen teilvernetzten Polyolefinmischung wird das Polymerisat a), das statistisch verteilte Ethylencopolymerisat b) und das kautschukartige Material c) mit der Bismaleinimidoverbindung d) vereinigt. Die Bismaleinimidoverbindung d) bewirkt dabei eine teilweise Vernetzung der Polyolefinmischung. Dabei kann das statistisch verteilte Ethylencopolymerisat b) und das kautschukartige Material c) dem Polymerisat a) sowohl vor, als auch nach der Umsetzung mit der Bismaleinimidoverbindung d) beigemischt werden.

Als Bismaleinimidoverbindungen d) werden in der erfindungsgemäßen Polyolefinmischung Verbindungen der folgenden Formel (I) eingesetzt, 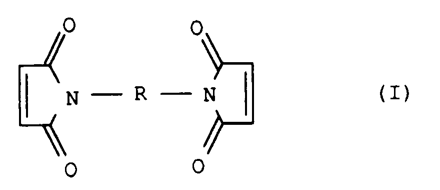 in der R die folgende Bedeutung hat:
C₁-C₂₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann, sowie einen Rest der folgenden Formel II

R¹-Z-R² (II)

wobei R¹ und R² jeweils unabhängig voneinander für C₁-C₆-Alkyl-, C₅-C₇-Cycloalkyl- oder C₆-C₁₀-Arylreste stehen, die ihrerseits jeweils mit einer oder mehrerer C₁-C₁₀-Alkyl- und/oder C₁-C₆-Alkoxy- und/oder C₁-C₄-Dialkylaminogruppen substituiert sein können,
und Z eine C₁-C₁₀-Alkylgruppe, eine C₁-C₄-Dialkylaminogruppe, ein Sauerstoffatom oder eine Sulfongruppe bedeutet.

Unter diesen Bismaleinimidoverbindungen d) sind insbesondere solche Verbindungen hervorzuheben, bei denen R die folgende Bedeutung hat:
C₂-C₁₀-Alkyl, wobei der Alkylrest mit einem oder mehreren Sauerstoffatomen unterbrochen sein kann,
   C₅-C₇-Cycloalkyl, C₆-C₁₅-Aryl, wobei der Cycloalkyl- bzw.
Arylrest jeweils seinerseits mit einer oder mehrerer C₁-C₄-Alkylgruppen substituiert sein kann, sowie
einen Rest der folgenden Formel II R¹-Z-R², wobei R¹ und R² jeweils unabhängig voneinander für C₁-C₆-Alkyl-, C₅-C₇-Cycloalkyl- oder C₆-C₁₀-Arylreste stehen, und Z ein Sauerstoffatom oder eine Sulfongruppe bedeuten.

Folgende Verbindungen werden besonders bevorzugt als Bismaleinimidoverbindungen d) verwendet: 1,6-Bismaleinimidohexan, 1,3-Bismaleinimidobenzol, 1,3-Bismaleinimido-4-methylbenzol, 4,4'-Bismaleinimidodiphenylmethan, 4,4'-Bismaleinimido-3,5,3',5'-tetramethyldiphenylmethan, oder 3,3'-Bismaleinimidodiphenylsulfon.

Die Bismaleinimidoverbindungen können beispielsweise dadurch hergestellt werden, daß Maleinsäureanhydrid mit den entsprechenden Diaminen und anschließend mit Essigsäure und Natriumacetat umgesetzt wird. Derartige Herstellungsverfahren sind dem Fachmann bekannt.

Die erfindungsgemäßen, teilvernetzten Polyolefinmischungen sind u.a. erhältlich durch Umsetzung des Polymerisats a), des statistisch verteilten Ethylencopolymerisats b) und des kautschukartigen Materials c) mit der Bismaleinimidoverbindung d) bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190 bis 260°C, Drücken von 1 bis 50 bar und mittlere Verweilzeiten von 0,2 bis 5 Minuten. Die erfindungsgemäßen Polyolefinmischungen können darüber hinaus u.a. auch dadurch hergestellt werden, daß man zunächst das Polymerisat a) mit der Bismaleinimidoverbindung d) umsetzt und anschließend das statistisch verteilte Ethylencopolymerisat b) und das kautschukartige Material c) hinzufügt. Die Umsetzung der einzelnen Komponenten erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

In einer bevorzugten Ausführungsform enthält die erfindungsgemäße, teilvernetzte Polyolefinmischung als weiteren Bestandteil ein statistisch verteiltes Propylencopolymerisat e) mit 1 bis 10 Gew.-% an einpolymerisierten C₂-C₁₀-Alk-1-enen. Bevorzugt ist dabei ein solches statistisch verteiltes Propylencopolymerisat e), dessen Gehalt an C₂-C₁₀-Alk-1-enen bei 2 bis 8 Gew.-% liegt. Als C₂-C₁₀-Alk-1-ene sind in diesem Zusammenhang insbesondere Ethylen, But-1-en, Pent-1-en, Hex-1-en, Hept-1-en sowie Oct-1-en oder Gemische aus diesen Comonomeren zu nennen, wobei bevorzugt Ethylen sowie But-1-en verwendet werden.

Die Herstellung derartiger statistisch verteilter Propylencopolymerisate e) kann mit den in der Polymerisationstechnik üblichen Ziegler-Natta-Katalysatoren sowohl in der Gasphase, als auch in Lösung oder in einer Aufschlämmung durchgeführt werden. Geeignete Reaktoren für diese Propylencopolymerisate e) sind u.a. absatzweise oder kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird. In einem bevorzugt angewandten Herstelllungsverfahren stellt man die statistisch verteilten Propylencopolymerisate e) dadurch her, daß man in einem Reaktor Propylen zusammen mit dem weiteren C₂-C₁₀-Alk-1-en bei Drücken von 20 bis 40 bar, Temperaturen von 30 bis 100°C und mittleren Verweilzeiten von 1 bis 5 Stunden mit Hilfe eines Ziegler-Natta-Katalysatorsystems aus der Gasphase heraus polymerisiert und dabei das Partialdruckverhältnis zwischen Propylen und dem C₂-C₁₀-Alk-1-en auf 5:1 bis 100:1 einstellt.

Das statistisch verteilte Propylencopolymerisat e) kann dem Polymerisat a), dem statistisch verteilten Ethylencopolymerisat b) und dem kautschukartigen Material c) sowohl vor als auch nach der Umsetzung mit der Bismaleinimidoverbindung d) beigemischt werden.

Die erfindungsgemäßen, teilvernetzten Polyolefinmischungen enthalten bevorzugt, bezogen auf 100 Gew.-Teile, 35 bis 90 Gew.-Teile Polymerisat a), 5 bis 60 Gew.-Teile statistisch verteiltes Ethylencopolymerisat b), 5 bis 40 Gew.-Teile kautschukartiges Material c) sowie 0 bis 20 Gew.-Teile statistisch verteiltes Propylencopolymerisat e). Besonders bevorzugt ist dabei eine solche Polyolefinmischung, die, bezogen auf 100 Gew.-Teile, aus 50 bis 80 Gew.-Teilen Polymerisat a), 5 bis 30 Gew.-Teilen statistisch verteiltes Ethylencopolymerisat b), 5 bis 30 Gew.-Teile kautschukartiges Material c) sowie 0 bis 15 Gew.-Teile statistisch verteiltes Propylencopolymerisat e) besteht. Nach einem möglichen Herstellungsverfahren werden die einzelnen Bestandteile der Polyolefinmischung, also a), b), c) sowie gegebenenfalls e), zunächst in einer Mischapparatur, beispielsweise einem Extruder oder einer Mühle vermengt und anschließend durch Umsetzung mit der Bismaleinimidoverbindung d) teilweise vernetzt. Nach einem anderen Herstellungsverfahren wird zunächst das Polymerisat a) mit der Bismaleinimidoverbindung d) umgesezt und anschließend die Komponenten b), c) sowie gegebenenfalls e) hinzugemischt.

Zur Herstellung der erfindungsgemäßen, teilvernetzten Polyolefinmischungen werden pro 100 Gew.-Teile der Komponenten a), b), c) und, falls vorhanden e) 0,001 bis 5 Gew.-Teile der Bismaleinimidoverbindung d) verwendet. Bevorzugt sind dabei solche teilvernetzten Polyolefinmischungen, die pro 100 Gew.-Teile der Komponenten a), b), c) und, falls vorhanden e) 0,01 bis 2 Gew.-Teile, insbesondere 0,02 bis 1 Gew.-Teile der Bismaleinimidoverbindung d) enthalten.

In einem bevorzugten Herstellungsverfahren wird zunächst das Polymerisat a) unmittelbar nach dessen Herstellung mit entsprechenden Mengen der Bismaleinimidoverbindung d) in einer, an den Herstellungsreaktor des Polymerisats a) angeschlossenen Mischapparatur umgesetzt. Danach werden dieser teilvernetzten Mischung entsprechende Mengen der Komponenten b), c) sowie gegebenenfalls e) hinzugefügt. Nach Beendigung der Umsetzung wird die teilweise vernetzte Kunststoffmasse aus der Mischapparatur ausgetragen und in einem daran angeschlossenen Schachttrockner von flüchtigen Ausgangsprodukten getrennt. Die auf diese Weise erhaltene Polyolefinmischung ist direkt weiterverarbeitbar.

Die Umsetzung der Komponenten a), b), c) sowie gegebenenfalls e) mit der Bismaleinimidoverbindung d) kann auch in Anwesenheit radikalisch zerfallender Initiatoren durchgeführt werden. Als radikalisch zerfallende Initiatoren werden vorzugsweise organische Peroxide oder Azoverbindungen eingesetzt. Bevorzugt werden dabei solche organischen Peroxidverbindungen verwendet, die bei einer Temperatur von 210°C Halbwertzeiten von 1 bis 30 Sekunden aufweisen. Innerhalb dieser Verbindungen sind insbesondere Dicumylperoxid, Monocumyl(tert.-butyl)-peroxid, Di(tert.butyl)peroxid, 2,5-Dimethyl-2,5-di(tert.butylperoxy)hexan und 2,5-Dimethyl-2,5-di(tert.butylperoxy)hexin-3 hervorzuheben.

In diesem Fall werden bei der Herstellung der erfindungsgemäßen, teilvernetzten Polyolefinmischungen pro 100 Gew.-Teile der Komponenten a), b), c) und, falls vorhanden e), 0,001 bis 2 Gew.-Teile des radikalisch zerfallenden Initiators eingesetzt.

Bevorzugt werden pro 100 Gew.-Teile der Komponenten a), b), c) und, falls vorhanden e) 0,001 bis 1 Gew.-Teile, insbesondere 0,002 bis 0,5 Gew.-Teile des radikalisch zerfallenden Initiators verwendet.

Die erfindungsgemäßen teilvernetzten Polyolefinmischungen weisen einen Schmelzflußindex von 0,01 bis 30 g/10 min., bei 230°C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche teilvernetzten Kunststoffmassen, deren Schmelzflußindex 0,02 bis 5 g/10 min, bei 230°C und unter einem Gewicht von 2,16 kg, beträgt. Sie können in geringerem Umfang noch die in der Kunststofftechnik üblichen Zusatzstoffe wie beispielsweise Talk, Ruß oder Metallcarbonate enthalten.

Durch die Wahl der speziellen Komponenten der Polyolefinmischung und der Bismaleinimidoverbindung d) erhält man teilvernetzte Polyolefinmischungen, die sich insbesondere durch eine hohe Formbeständigkeit, gute Dehnungseigenschaften und eine leichte Verarbeitbarkeit auszeichnen. Die erfindungsgemäßen, teilvernetzten Polyolefinmischungen sind auf einfache Weise erhältlich, da die Vernetzungsreaktion in einem Schritt durchgeführt werden kann und die Zahl der dazu benötigten Substanzen begrenzt ist.

Die erfindungsgemäßen teilweise vernetzten Kunststoffmassen eigenen sich aufgrund ihrer relativ guten Verarbeitbarkeit insbesondere als Materialien für den Spritzguß, das Blasfomren, die Extrusion und die Herstellung von Schäumen. Sie können dabei zur Herstellung von Formkörpern, Folien und Überzugsmaterialien verwendet werden.

### Beispiele

Die Beispiele 1 - 5 sowie die Vergleichsbeispiele A - C wurden in einem Zweischneckenextruder der Firma Werner & Pfleiderer mit einem Längen/Durchmesser-Verhältnis von 30 durchgeführt. Die dabei verwendeten Komponenten der Polyolefinmischung a), b), c), sowie gegebenenfalls e) wurden dem Zweischneckenextruder als Grieß oder Granulat zugeführt. Die Umsetzung der Bismaleinimidoverbindung d) mit den Komponenten a), b), c), und falls vorhanden e) erfolgte in allen Beispielen bei einer Temperatur von 220 bis 250°C, einem Druck von 10 bis 20 bar und einer mittleren Verweilzeit von bis zu 1 Minute.

### Beispiel 1

I. Zunächst wurden 100 Gew.-Teile eines Polymerisats a) aus 55 Gew.-% eines Propylencopolymerisats mit 2,5 Gew.-% einpolymerisiertem Ethylen und aus 45 Gew.-% eines weiteren Propylencopolymerisats mit 60 Gew.-% einpolymerisiertem Ethylen mit 0,4 Gew.-Teilen 1,3-Bismaleinimidobenzol im Zweischneckenextruder bei einer Temperatur von 240°C, einem Druck von 10 bar und einer mittleren Verweilzeit von 30 Sekunden vermischt. Der Schmelzflußindex des Polymerisats a) betrug 0,9 g/10 min., bei 230°C und 2,16 kg, nach DIN 53 735.
II. 70 Gew.-Teile des auf diese Weise erhaltenen teilvernetzten Polymerisats a) wurden anschließend mit 10 Gew.-Teilen eines statistisch verteilten Ethylencopolymerisats b) mit 16 Gew.-% einpolymerisiertem But-1-en, einem Schmelzflußindex von 1,4 g/10 min., bei 230°C und 2,16 kg, nach DIN 53 735 und einer Dichte von 0,9 g/cm³ und 20 Gew.-Teilen eines Ethylen-Propylencopolymerisats als kautschukartiges Material c, mit einem Propylengehalt von 25 Gew.-%, einem Schmelzflußindex von 3 g/10 min., bei 230°C und 10 kg, nach ASTM D 1238 und einer Shore A-Härte von 84 und 0,25 Gew.-Teilen Ruß im Zweischneckenextruder vermischt. Dies geschah bei einer Temperatur von 220°C, einem Druck von 20 bar und einer mittleren Verweilzeit von 28 Sekunden.

Von der erhaltenen teilvernetzten Polyolefinmischung wurde nach dem Castfilm-Verfahren in einer Breitschlitzfolienanlage bei einer Temperatur von 255°C und einem Druck von 145 bar eine Breitschlitzfolie von 420 mm Breite und 0,3 mm Dicke hergestellt.

Der Schmelzflußindex, die Shore D-Härte und der Wert für den Durchhang für die auf diese Weise erhaltene Folie sind in der nachfolgenden Tabelle 1 aufgeführt.

### Beispiel 2

Analog dem Beispiel 1 wurde unter gleichen Bedingungen mit den selben Komponenten a), b), c) und d) eine teilweise Vernetzung durchgeführt. Der eigentliche Vernetzungsschritt I erfolgte in diesem Beispiel noch in Anwesenheit von 0,01 Gew.-Teilen 2,5-Dimethyl-2,5-di-(tert.butylperoxy)hexan, bezogen auf 100 Gew.-Teile Polymerisat a).

Von der erhaltenen teilvernetzten Polyolefinmischung wurde nach dem Castfilm-Verfahren in einer Breitschlitzfolienanlage bei einer Temperatur von 255°C und einem Druck von 145 bar eine Breitschlitzfolie von 420 mm Breite und 0,3 mm Dicke hergestellt.

Der Schmelzflußindex, die Shore D-Härte und der Wert für den Durchhang für die auf diese Weise erhaltene Folie sind in der nachfolgenden Tabelle 1 aufgeführt.

### Vergleichsbeispiel A

Analog dem erfindungsgemäßen Beispiel 1 wurden die gleichen Komponenten a), b) und c) miteinander vermischt, auf die Zugabe der Bismaleinimidoverbindung d) wurde jedoch verzichtet, so daß die Vernetzung unterblieb.

Von der erhaltenen teilvernetzten Polyolefinmischung wurde nach dem Castfilm-Verfahren in einer Breitschlitzfolienanlage bei einer Temperatur von 260°C und einem Druck von 135 bar eine Breitschlitzfolie von 420 mm Breite und 0,3 mm Dicke hergestellt.

Der Schmelzflußindex, die Shore D-Härte und der Wert für den Durchhang für die auf diese Weise erhaltene Folie sind in der nachfolgenden Tabelle 1 aufgeführt.

### Beispiel 3

55 Gew.-Teile eines Polymerisats a) aus 55 Gew.-% eines Propylenhomopolymerisats und 45 Gew.-% eines Propylencopolymerisats mit 51 Gew.-% einpolymerisiertem Ethylen und einem Schmelzflußindex von 2,1 g/10 min, bei 230°C und 2,16 kg, nach DIN 53 735, wurden im Zweischneckenextruder bei einer Temperatur von 240°C, einem Druck von 20 bar und einer mittleren Verweilzeit von 30 Sekunden mit 25 Gew.-Teilen des im Beispiel 1 verwendeten statistisch verteilten Ethylencopolymerisats b), 10 Gew.-Teilen eines kautschukartigen Materials c) und 10 Gew.-Teilen eines statistisch verteilten Propylencopolymerisats e) vermischt und vernetzt. Als kautschukartiges Material c) wurde dabei ein Styrol-Ethylen-But-1-en-Terpolymerisat mit einem Schmelzflußindex von 2,4 g/10 min., bei 230°C und 2,16 kg, nach DIN 53 735 und einer Shore A-Härte von 75 verwendet. Das statistisch verteilte Propylencopolymerisat e) enthielt 4 Gew.-% einpolymerisiertes Ethylen und 2 Gew.-% But-1-en und wies einen Schmelzflußindex von 5 g/10 min., bei 230°C und 2,16 kg, nach DIN 53 735 auf. Die Vernetzung erfolgte mit Hilfe von 0,03 Gew.-Teilen 2,5-Dimethyl-2,5-di-(tert.butylperoxy)hexan und 0,3 Gew.-Teilen 1,3-Bismaleinimidobenzol. Außerdem enthielt die Mischung noch 0,25 Gew.-Teile Ruß.

Von der erhaltenen teilvernetzten Polyolefinmischung wurde nach dem Castfilm-Verfahren in einer Breitschlitzfolienanlage bei einer Temperatur von 255°C und einem Druck von 145 bar eine Breitschlitzfolie von 420 mm Breite und 1 mm Dicke hergestellt.

Der Schmelzflußindex, die Shore D-Härte und der Wert für den Durchhang für die auf diese Weise erhaltene Folie sind in der nachfolgenden Tabelle 1 aufgeführt.

### Beispiel 4

55 Gew.-Teile des im Beispiel 1 im Schritt I hergestellten, teilvernetzten Polymerisats a) wurden mit 25 Gew.-Teilen des im Beispiel 3 eingesetzten, statistisch verteilten Ethylencopolymerisats b), 10 Gew.-Teilen des aus Beispiel 3 bekannten kautschukartigen Materials c) und 10 Gew.-Teilen des aus Beispiel 3 bekannten statistisch verteilten Propylencopolymerisats e) im Zweischneckenextruder unter den gleichen Bedingungen wie in Beispiel 3 beschrieben vermischt und vernetzt. Die Mischung enthielt noch 0,25 Gew.-Teile Ruß. Im Unterschied zum Beispiel 3 erfolgte die Vernetzung in diesem Fall bei einer Temperatur von 220°C.

Von der erhaltenen teilvernetzten Polyolefinmischung wurde nach dem Castfilm-Verfahren in einer Breitschlitzfolienanlage bei einer Temperatur von 255°C und einem Druck von 145 bar eine Breitschlitzfolie von 420 mm Breite und 1 mm Dicke hergestellt.

Der Schmelzflußindex, die Shore D-Härte und der Wert für den Durchhang für die auf diese Weise erhaltene Folie sind in der nachfolgenden Tabelle 1 aufgeführt.

### Vergleichsbeispiel B

Analog dem erfindungsgemäßen Beispiel 3 wurde eine Polyolefinmischung hergestellt, im Unterschied zum Beispiel 3 wurde jedoch auf die Zugabe der Bismaleinimidoverbindung d) verzichtet, so daß die Vernetzung unterblieb.

Von der erhaltenen teilvernetzten Polyolefinmischung wurde nach dem Castfilm-Verfahren in einer Breitschlitzfolienanlage bei einer Temperatur von 255°C und einem Druck von 145 bar eine Breitschlitzfolie von 420 mm Breite und 1 mm Dicke hergestellt.

Der Schmelzflußindex, die Shore D-Härte und der Wert für den Durchhang für die auf diese Weise erhaltene Folie sind in der nachfolgenden Tabelle 1 aufgeführt.

**Tabelle 1**

| Eigenschaften der erhaltenen Polyolefinmischungen | | | | | | |
|---|---|---|---|---|---|---|
| | Beispiele | | Vergl.- Bsp. A | Beispiele | | Vergl. Bsp. B |
| | 1 | 2 | | 3 | 4 | |
| Schmelzflußindex^{a)} [g/10 min] | o,5 | 0,4 | 0,7 | 0,24 | 0,7 | 1,7 |
| Shore D-Härte^{b)} | 34 | 36 | 32 | 41 | 41 | 37 |
| Durchhang^{c)} [cm] | 105 | 132 | 163 | 21 | 24 | 28 |

| | | | | | | |
|---|---|---|---|---|---|---|
| ^{a)} bei 230°C und 2,16 kg, nach DIN 53 735 | | | | | | |
| ^{b)} nach DIN 53 505 | | | | | | |
| ^{c)} Zur Messung des Durchhangs wurde die Folie durch eine Infrarotheizung von oben her in einer konventionellen Tiefziehmaschine auf eine Folienoberflächentemperatur von 198°C gebracht. Die Folie wurde in einen Rahmen von 500 mm x 300 mm eingespannt. Die Folie wurde mit einem Gewicht von 50 g belastet, welches über eine Zugvorrichtung einen Zeiger bewegte, der den Durchhang während des Aufheizens anzeigte. Zu beachten ist dabei, daß dünnere Folien in der Regel einen stärkeren Durchhang zeigen. | | | | | | |

### Vergleichsbeispiel C

100 Gew.-Teile des im Beispiel 3 verwendeten Polymerisats a) wurden mit 0,4 Gew.-Teilen 1,3-Bismaleinimidobenzol bei einer Temperatur von 240°C, einem Druck von 10 bar und einer mittleren Verweilzeit von 30 Sekunden vermischt.

Von der erhaltenen teilvernetzten Polyolefinmischung wurde nach dem Castfilm-Verfahren in einer Breitschlitzfolienanlage bei einer Tempertur von 255°C und einem Druck von 145 bar eine Breitschlitzfolie von 420 mm Breite und 0,3 mm Dicke hergestellt.

Der Schmelzflußindex, die Shore D-Härte und der Wert für die bleibende Dehnung für die auf diese Weise erhaltene Folie sind in der nachfolgenden Tabelle 2 aufgeführt.

### Beispiel 5

70 Gew.-Teile der aus dem Vergleichsbeispiel C erhaltenen Mischung wurden mit 20 Gew.-Teilen eines kautschukartigen Materials c) aus 50 Gew.-% Polyisobutylen und 50 Gew.-% Polyethylen mit einem Schmelzflußindex von 0,6 g/10 min., bei 230°C und 2,16 kg, nach DIN-A 53 735 und einer Shore D-Härte von 80 und mit 10 Gew.-Teilen des in Beispiel 1 verwendeten statistisch verteilten Ethylencopolymerisats b) bei 220°C, 20 bar und 28 Sekunden durchschnittlicher Verweilzeit vermischt. Die Polyolefinmischung enthielt ferner noch 0,25 Gew.-Teile Ruß.

Von der erhaltenen teilvernetzten Polyolefinmischung wurde nach dem Castfilm-Verfahren in einer Breitschlitzfolienanlage bei einer Temperatur von 255°C und einem Druck von 145 bar, eine Breitschlitzfolie von 420 mm Breite und 0,3 mm Dicke hergestellt.

Der Schmelzflußindex, die Shore D-Härte und der Wert für die bleibende Dehnung für die auf diese Weise erhaltene Folie sind in der nachfolgenden Tabelle 2 aufgeführt.

**Tabelle 2**

| Eingenschaften der erhaltenen Polyolefinmischungen | | |
|---|---|---|
| | Beispiel 5 | Vergleichsbeispiele C |
| Schmelzflußindex^{a)} [g/10 min] | 0,8 | 0,67 |
| Shore D-Härte^{b)} | 37 | 49 |
| bleibende Dehnung^{c)} | 77 | 98 |

| | | |
|---|---|---|
| ^{a)} bei 230°C und 2,16 kg, nach DIN 53 735 | | |
| ^{b)} nach DIN 53 505 | | |
| ^{c)} nach 2 Stunden, Messung an 15 mm breiten und 160 mm langen Folienstreifen, die mit Hilfe eines Zugapparates entsprechend DIN 53 455 mit einer Geschwindigkeit von 50 mm/min. um 200 % gedehnt wurden. | | |

Aus einem Vergleich zwischen den erfindungsgemäßen Beispielen 1 - 5 mit den Vergleichsbeispielen A - C wird deutlich, daß die erfindungsgemäßen Polyolefinmischungen als Folien einen geringeren Durchhang zeigen (Beispiele 1 und 2 - Vergleichsbeispiel A; Beispiele 3 und 4 - Vergleichsbeispiel B). Darüber hinaus zeichnen sich die erfindungsgemäßen Polyolefinmischungen durch eine verringerte bleibende Dehnung aus (Beispiel 5 - Vergleichsbeispiel C).

## Patentansprüche

1. Teilvernetzte Polyolefinmischungen, erhältlich durch Teilvernetzung der nachfolgenden Komponenten a), b), c) und falls vorhanden e) mit der Komponente d), wobei als Komponenten a), b), c) und d) eingesetzt werden
a) ein Polymerisat aus 25 bis 97 Gew.-% eines Propylenpolymerisats (I), das 0 bis 15 Gew.-% an einpolymerisierten C₂-C₁₀-Alk-1-enen enthält und aus 3 bis 75 Gew.-% eines weiteren Propylenpolymerisats (II), das 15 bis 80 Gew.-% einpolymerisierte C₂-C₁₀-Alk-1-ene aufweist,
b) ein statistisch verteiltes Ethylencopolymerisat mit 5 bis 20 Gew.-% an einpolymerisierten C₃-C₁₀-Alk-1-enen und einer Dichte bei Raumtemperatur von 0,89 bis 0,925 g/cm³
c) ein kautschukartiges Material mit einer Shore A-Härte von 30 bis 90 (nach DIN 53 505)und
d) eine Bismaleinimidoverbindung der folgenden Formel (I) 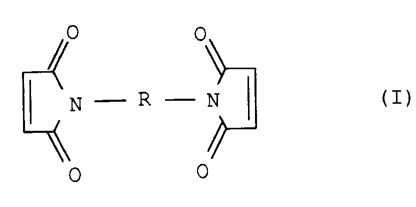 in der R die folgende Bedeutung hat:
C₁-C₂₀-Alkyl, wobei der Alkylrest mit einem oder mehreren Sauerstoffatomen unterbrochen sein kann, C₅-C₇-cycloalkyl, C₆-C₁₅-Aryl, wobei der Cycloalkyl- bzw. Arylrest jeweils seinerseits mit einer oder mehrerer C₁-C₁₀-Alkyl- und/oder C₁-C₆-Alkoxy- und/oder C₁-C₄-Dialkylaminogruppen substituiert sein kann, sowie einen Rest der folgenden Formel (II)
R¹-Z-R² (II)
wobei R¹ und R² jeweils unabhängig voneinander für C₁-C₁₀-Alkyl-, C₅-C₇-cycloalkyl- oder C₆-C₁₀-Arylreste stehen, die ihrerseits jeweils mit einer oder mehrerer C₁-C₁₀-Alkyl- und/oder C₁-C₆-Alkoxy- und/ oder C₁-C₄-Dialkylaminogruppen substituiert sein können,
und Z eine C₁-C₁₀-Alkylgruppe, eine C₁-C₄-Dialkylaminogruppe, ein Sauerstoffatom oder eine Sulfongruppe bedeutet und
^{e)} gegebenenfalls ein statistisch verteiltes Propylencopolymerisat mit 1 bis 10 Gew.-% an einpolymerisierten C₂-C₁₀-Alk-1-enen mitverwendet wird.

2. Teilvernetzte Polyolefinmischungen nach dem Anspruch 1, wobei das Polymerisat a) aus 35 bis 95 Gew.-% eines Propylenpolymerisats (I) mit 0 bis 12 Gew.-% einpolymerisierter C₂-C₁₀-Alk-1-ene und aus 5 bis 65 Gew.-% eines Propylenpolymerisats (II) mit 20 bis 75 Gew.-% einpolymerisierter C₂-C₁₀-Alk-1-ene besteht.

3. Teilvernetzte Polyolefinmischungen nach den Ansprüchen 1 oder 2, wobei das Polymerisat a) als Propylenpolymerisat (I) ein Propylenhomopolymerisat enthält.

4. Teilvernetzte Polyolefinmischungen nach den Ansprüchen 1 bis 3, wobei als Bismaleinimidoverbindungen d) Verbindungen der Formel (I) verwendet werden, in der R die folgende Bedeutung hat:
C₂-C₁₀-Alkyl, wobei der Alkylrest mit einem oder mehreren Sauerstoffatomen unterbrochen sein kann, C₅-C₇-Cycloalkyl, C₆-C₁₅-Aryl, wobei der Cycloalkyl- bzw. Arylrest jeweils seinerseits mit einer oder mehrerer C₁-C₄-Alkylgruppen substituiert sein kann, sowie einen Rest der Formel (II) R¹-Z-R², wobei R¹ und R² jeweils unabhängig voneinander für C₁-C₆-Alkyl-, C₅-C₇-Cycloalkyl- oder C₆-C₁₀-Arylreste stehen, und Z ein Sauerstoffatom oder eine Sulfongruppe bedeutet.

5. Teilvernetzte Polyolefinmischungen nach den Ansprüchen 1 bis 4, wobei die Polymerisate a), b), c) und e) in folgenden Mengenverhältnissen, bezogen auf 100 Gew.-Teile, verwendet werden:
35 bis 90 Gew.-Teile Polymerisat a)
5 bis 60 Gew.-Teile statistisch verteiltes Ethylencopolymerisat b)
5 bis 40 Gew.-Teile kautschukartiges Material c)
0 bis 20 Gew.-Teile statistisch verteiltes Propylencopolymerisat e)

6. Teilvernetzte Polyolefinmischungen nach den Ansprüchen 1 bis 5, wobei pro 100 Gew.-Teile der Komponenten a), b), c) und, falls vorhanden e) 0,001 bis 5 Gew.-Teile der Bismaleinimidoverbindung d) verwendet werden.

7. Verfahren zur Herstellung von teilvernetzten Polyolefinmischungen gemäß den Ansprüchen 1 bis 6, dadurch gekennzeichnet, daß man die Komponenten a), b), c) und, falls vorhanden e) bei Temperaturen von 180 bis 280°C, Drücken von 1 bis 100 bar und mittleren Verweilzeiten des Reaktionsgemisches von 0,2 bis 10 Minuten mit der Bismaleinimidoverbindung d) umsetzt.

8. Verfahren zur Herstellung von teilvernetzten Polyolefinmischungen nach Anspruch 7, dadurch gekennzeichnet, daß man zunächst die Bismaleinimidoverbindung d) mit dem Polymerisat a) unmittelbar nach dessen Herstellung in einer, an den Herstellungsreaktor angeschlossenen Mischapparatur umsetzt und anschließend die Komponenten b), c), sowie gegebenenfalls e) hinzufügt.

9. Verfahren zur Herstellung von teilvernetzten Polyolefinmischungen nach den Ansprüchen 7 oder 8, dadurch gekennzeichnet, daß man die Umsetzung der Komponenten a), b), c) und, falls vorhanden e) mit der Bismaleinimidoverbindung d) in Anwesenheit radikalisch zerfallender Initiatoren durchführt.

## Claims

1. A partially crosslinked polyolefin blend, obtainable by partially crosslinking the following components a), b), c) and, if present, e) with the component d), the components a), b), c) and d) used being
a) a polymer of from 25 to 97% by weight of a propylene polymer (I), which contains from 0 to 15% by weight of polymerized C₂-C₁₀-alk-1-enes, and of from 3 to 75% by weight of a further propylene polymer (II) which contains from 15 to 80% by weight of polymerized C₂-C₁₀-alk-1-enes,
b) a random ethylene copolymer with from 5 to 20% by weight of polymerized C₃-C₁₀-alk-1-enes and having a density of from 0.89 to 0.925 g/cm³ at room temperature,
c) a rubber-like material having a Shore A hardness of from 30 to 90 (according to DIN 53,505) and
d) a bismaleimido compound of the following formula (I) 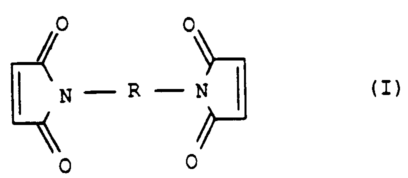 where R is C₁-C₂₀-alkyl which may be interrupted by one or more oxygen atoms, or C₅-C₇-cycloalkyl or C₆-C₁₅-aryl, each of which in turn may be substituted by one or more C₁-C₁₀-alkyl and/or C₁-C₆-alkoxy and/or C₁-C₄-dialkylamino groups, or a radical of the following formula (II)
R¹-Z-R² (II)
where R¹ and R² independently of one another are each C₁-C₁₀-alkyl, C₅-C₇-cycloalkyl or C₆-C₁₀-aryl, each of which in turn may be substituted by one or more C₁-C₁₀-alkyl and/or C₁-C₆-alkoxy and/or C₁-C₄-dialkylamino groups,
and Z is C₁-C₁₀-alkyl, C₁-C₄-dialkylamino, oxygen or sulfonyl, and
e) if required, a random propylene copolymer with from 1 to 10% by weight of polymerized C₂-C₁₀-alk-1-enes is also used.

2. A partially crosslinked polyolefin blend as claimed in claim 1, wherein the polymer a) consists of from 35 to 95% by weight of a propylene polymer (I) with from 0 to 12% by weight of polymerized C₂-C₁₀-alk-1-enes and of from 5 to 65% by weight of a propylene polymer (II) with from 20 to 75% by weight of polymerized C₂-C₁₀-alk-1-enes.

3. A partially crosslinked polyolefin blend as claimed in claim 1 or 2, wherein the polymer a) contains a propylene homopolymer as propylene polymer (I).

4. A partially crosslinked polyolefin blend as claimed in any of claims 1 to 3, wherein the bismaleimido compound d) used is a compound of the formula (I) where R is C₂-C₁₀-alkyl which may be interrupted by one or more oxygen atoms, or C₅-C₇-cycloalkyl or C₆-C₁₅-aryl, each of which in turn may be substituted by one or more C₁-C₄-alkyl groups, or a radical of the formula (II) R¹-Z-R², where R¹ and R² independently of one another are each C₁-C₆-alkyl, C₅-C₇-cycloalkyl or C₆-C₁₀-aryl and Z is oxygen or sulfonyl.

5. A partially crosslinked polyolefin blend as claimed in any of claims 1 to 4, wherein the polymers a), b), c) and e) are used in the following ratios, based on 100 parts by weight:
from 35 to 90 parts by weight of polymer a)
from 5 to 60 parts by weight of random ethylene copolymer b)
from 5 to 40 parts by weight of rubber-like material c)
from 0 to 20 parts by weight of random propylene copolymer e).

6. A partially crosslinked polyolefin blend as claimed in any of claims 1 to 5, wherein from 0.001 to 5 parts by weight of the bismaleimido compound d) are used per 100 parts by weight of the components a), b), c) and, if present, e).

7. A process for the preparation of a partially crosslinked polyolefin blend as claimed in any of claims 1 to 6, wherein the components a), b), c) and, if present, e) are reacted with the bismaleimido compound d) at from 180 to 280°C and from 1 to 100 bar and in an average residence time of the reaction mixture of from 0.2 to 10 minutes.

8. A process for the preparation of a partially crosslinked polyolefin blend as claimed in claim 7, wherein the bismaleimido compound d) is first reacted with the polymer a) immediately after its preparation in a mixing apparatus connected to the preparation reactor, and the components b), c) and, if required, e) are then added.

9. A process for the preparation of a partially crosslinked polyolefin blend as claimed in claim 7 or 8, wherein the reaction of the components a), b), c) and, if present, e) with the bismaleimido compound d) is carried out in the presence of a free radical initiator.

## Revendications

1. Mélanges de polyoléfines partiellement réticulées, pouvant être obtenus par réticulation partielle des composants a), b), c) et, s'il est présent, e) avec le composant d) ci-après, tandis que sont utilisés comme composants a), b), c) et d)
a) un polymère composé de 25 à 97 % en poids d'un polymère de propylène (I), qui contient 0 à 15 % en poids d'alc-1-ènes en C2-C10 copolymérisés, et de 3 à 75 % en poids d'un autre polymère de propylène (II), qui présente 15 à 80 % en poids d'alc-1-ène en C₂-C₁₀ copolymérisé,
b) un copolymère d'éthylène à répartition statistique ayant 5 à 20 % en poids d'alc-1-ènes en C₃-C₁₀ copolymérisés et une densité à température ambiante de 0,89 à 0,925 g/cm³,
c) une matière de type caoutchouteux ayant une dureté Shore A de 30 à 90 (selon la norme DIN 53 505) et
d) un composé bismaléinimido répondant à la formule suivante (I) 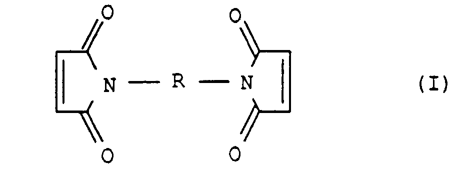 où R a la signification ci-après:
alkyle en C₁-C₂₀, le reste alkyle pouvant être interrompu par un ou plusieurs atomes d'oxygène, cycloalkyle en C₅-C₇, aryle en C₆-C₁₅, le reste cycloalkyle ou aryle pouvant dans chaque cas être à son tour substitué par un ou plusieurs groupes alkyle en C₁-C₁₀ et/ou alcoxy en C₁-C₆ et/ou dialkyl(C₁-C₄)amino, ainsi qu'un reste de formule (II) suivante
R¹-Z-R² (II)
où R¹ et R² désignent dans chaque cas, indépendamment l'un de l'autre, des restes alkyle en C₁-C₁₀, cycloalkyle en C₅-C₇ ou aryle en C₆-C₁₀, qui à leur tour peuvent être à chaque fois substitués par un ou plusieurs groupes alkyle en C₁-C₁₀ et/ou alcoxy en C₁-C₆ et/ou dialkyl(C₁-C₄)amino,
et Z représente un groupe alkyle en C₁-C₁₀, un groupe dialkyl(C₁-C₄)amino, un atome d'oxygène ou un groupe sulfone, et
e) éventuellement un copolymère de propylène à répartition statistique ayant 1 à 10 % en poids d'alc-1-ènes en C₂-C₁₀ copolymérisés.

2. Mélanges de polyoléfines partiellement réticulées selon la revendication 1, dans lesquels le polymère a) consiste en 35 à 95 % en poids d'un polymère de propylène (I) ayant 0 à 12 % en poids d'alc-1-ène en C₂-C₁₀ copolymérisé et en 5 à 65 % en poids d'un polymère de propylène (II) ayant 20 à 75 % en poids d'alc-1-ène en C₂-C₁₀ copolymérisé.

3. Mélanges de polyoléfines partiellement réticulées selon l'une des revendications 1 ou 2, dans lesquels le polymère a) contient en tant que polymère de propylène (I) un homopolymère de propylène.

4. Mélanges de polyoléfines partiellement réticulées selon l'une quelconque des revendications 1 à 3, dans lesquels sont utilisés comme composés bismaléinimido d) des composés de formule (I), où R a la signification suivante:
alkyle en C₂-C₁₀, le reste alkyle pouvant être interrompu par un ou plusieurs atomes d'oxygène, cycloalkyle en C₅-C₇, aryle en C₆-C₁₅, le reste cycloalkyle ou aryle pouvant dans chaque cas être à son tour substitué par un ou plusieurs groupes alkyle en C₁-C₄, ainsi qu'un reste de formule (II) R¹-Z-R², où R¹ et R² désignent dans chaque cas, indépendamment l'un de l'autre, des restes alkyle en C₁-C₆, cycloalkyle en C5-C7 ou aryle en C₆-C₁₀, et Z représente un atome d'oxygène ou un groupe sulfone.

5. Mélanges de polyoléfines partiellement réticulées selon l'une quelconque des revendications 1 à 4, dans lesquels les polymères a), b), c) et e) sont utilisés dans les proportions suivantes, par rapport à 100 parties en poids:
35 à 90 parties en poids de polymère a)
5 à 60 parties en poids de copolymère d'éthylène à répartition statistique b)
5 à 40 parties en poids de matière caoutchouteuse c)
0 à 20 parties en poids de copolymère de propylène à répartition statistique e).

6. Mélanges de polyoléfines partiellement réticulées selon l'une quelconque des revendications 1 à 5, dans lesquels pour 100 parties en poids des composants a), b), c) et, s'il est présent, e), on utilise 0,001 à 5 parties en poids du composé de bismaléinimido d).

7. Procédé pour la préparation de mélanges de polyoléfines partiellement réticulées selon l'une quelconque des revendications 1 à 6, caractérisé par le fait que les composants a), b), c) et, s'il est présent, e) sont mis à réagir à des températures de 180 à 280°C, des pressions de 1 à 100 bar et des durées de séjour moyennes du mélange réactionnel de 0,2 à 10 minutes avec le composé de bismaléinimido d).

8. Procédé pour la préparation de mélanges de polyoléfines partiellement réticulées selon la revendication 7, caractérisé par le fait qu'on fait d'abord réagir le composé de bismaléinimido d) avec le polymère a), directement après sa préparation dans un mélangeur relié au réacteur de préparation et ensuite on ajoute les composants b), c), ainsi qu'éventuellement e).

9. Procédé pour la préparation de mélanges de polyoléfines partiellement réticulées selon l'une des revendications 7 ou 8, caractérisé par le fait qu'on effectue la réaction des composants a), b), c) et, s'il est présent, e) avec le composé bismaléinimido d) en présence d'initiateurs se décomposant par voie radicalaire.
